## Europäisches Patentamt

## European Patent Office

## Office européen des brevets

(19)

(11) Publication number: **0 194 040**
**B1**

(12)

# EUROPEAN PATENT SPECIFICATION

(45) Date of publication of the patent specification:
16.05.90

(51) Int. Cl.⁵: **H02G 15/18**

(21) Application number: **86300833.0**

(22) Date of filing: **06.02.86**

(54) **Pressurized cable junction closure and method for its production.**

(30) Priority: **06.02.85 US 698664**

(43) Date of publication of application:
**10.09.86 Bulletin 86/37**

(45) Publication of the grant of the patent:
**16.05.90 Bulletin 90/20**

(84) Designated Contracting States:
**AT BE CH DE FR GB IT LI NL SE**

(56) References cited:
**EP-A- 0 034 042**
**EP-A- 0 057 582**

(73) Proprietor: **RAYCHEM CORPORATION (a Delaware corporation), 300 Constitution Drive, Menlo Park, California 94025(US)**

(72) Inventor: **Gamarra, Jose P., 4581 Delores Drive, Union City California 94587(US)**

(74) Representative: **Benson, John Everett et al, Raychem Limited Intellectual Property Law Department Faraday Road Dorcan, Swindon, Wiltshire SN3 5HH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

1. Field of the Invention

The present invention relates to a pressurized closure for bracing a junction between cables which, in use, are pressurized, and in particular to a pressure-retaining vessel within the closure for withstanding pressure in the cables when in use and a method of forming it.

2. Description of the Prior Art

Oftentimes it is necessary to interconnect pressurized cables thus forming a junction therebetween or to repair a cable which, in use, is pressurized, thus forming a junction region in a vicinity of the repair. Subsequent to forming the junction, which junction typically includes splices, it is necessary to enclose the junction so as to environmentally isolate it and keep contaminants therefrom, e.g., water, and the enclosing means must necessarily be capable of withstanding the pressure maintained within the cables when in use for a considerably long period of time. Prior art methods and apparatuses for enclosing such a junction are relatively complicated in design, include a relatively large number of elements, and must normally be prepared from relatively expensive creep-resistant materials throughout. Such closures are not only expensive to manufacture but also relatively complicated to install due to the complicated structure of the closure, thus requiring an undue amount of craft-sensitivity, which often results in improper installation and premature pressure leakage.

An assembly for sealing and protection of cable splices comprising a recoverable, preferably heat-recoverable, outer sleeve surrounding a cable or other body; a thermoplastic support layer surrounding the body and within the sleeve; and a heat barrier layer, preferably foamed, between the support and the sleve to prevent thermal deformation of the support during heat recovery of the sleeve or during other heat treatment is described in EP-A 34 042.

Summary of the Invention

Accordingly, it is an object of the present invention to provide a pressure-retaining vessel and closure which is relatively simple in construction and inexpensive to form.

These and other objects are achieved by the provision of a structure capable of forming a pressure-retaining vessel around a junction when heat is applied to a member in an amount sufficient to activate adhesives used in the structure. Specifically, the structure includes a liner made of a relatively heat-stable material and which has a first adhesive disposed on a surface thereof in a vicinity of overlapping sides thereof, the liner optionally having multiple finger extensions extending from opposite ends thereof; a reinforcing layer disposed adjacent the liner and having a second adhesive formed theron so as to be adjacent to ends of the liner; and a member disposed around the liner and the reinforcing layer, the member optionally containing a hot-melt adhesive on an inner surface thereof.

Upon applying heat to the member, the first and second adhesives melt and flow and, together with the liner and the reinforcing layer, form a pressure-retaining vessel around the junction which is capable of withstanding all anticipated internal pressures existing within the cables connected by the junction when the cables are in use. Accordingly the materials forming the member can be less expensive than otherwise required since they do not need to be overly creep-resistant and capable of handling any significant amount of the pressure within the cables, and can also be made thinner.

Preferably, the reinforcing layer is disposed outside the liner though an opposite configuration wherein the reinforcing layer is disposed within the liner is possible, and preferentially the liner and the reinforcing layer are integrally connected during manufacture and prior to installation though they can be separately supplied and applied at the junction. In addition, the first adhesive can be disposed on entire opposite surfaces of the liner, including the vicinity of the overlapping sides thereof, alternatively the first adhesive can be formed on portions of the liner in a vicinity of the overlap region.

The reinforcing layer preferentially comprises a fibrous mat, fabric, or film impregnated throughout with the second adhesive so as to insure that an adequate amount of adhesive is present in a vicinity of overlapping sides of the liner as well as the finger extensions thereof to insure that a pressure-retaining vessel is formed therewith, though other embodiments are possible wherein the second adhesive is only impregnated within the reinforcing layer at specific portions thereof, e.g., portions which confront the opposite ends of the liner.

Brief Description of the Drawings

Figures 1 and 2 illustrate perspective views of first and second preferred embodiments of a pressure-retaining vessel, constructed in accordance with the teachings of the present invention;

Figure 3 illustrates one preferred embodiment of an open closure including the pressure-retaining vessel of Figure 1;

Figure 4 and 6 illustrate partial cross-sectional views of closures including pressure-retaining vessels, the closures being closed; and

Figures 5 and 7 illustrate alternative preferred embodiments of a pressure-retaining vessel 1 constructed according to the present invention.

Description of the Preferred Embodiments

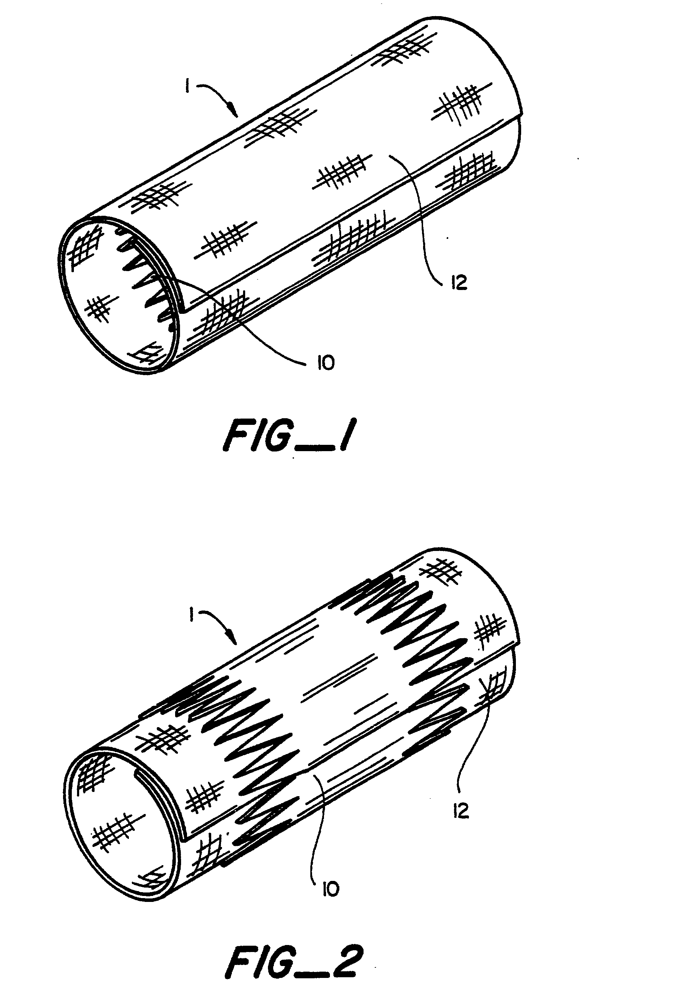

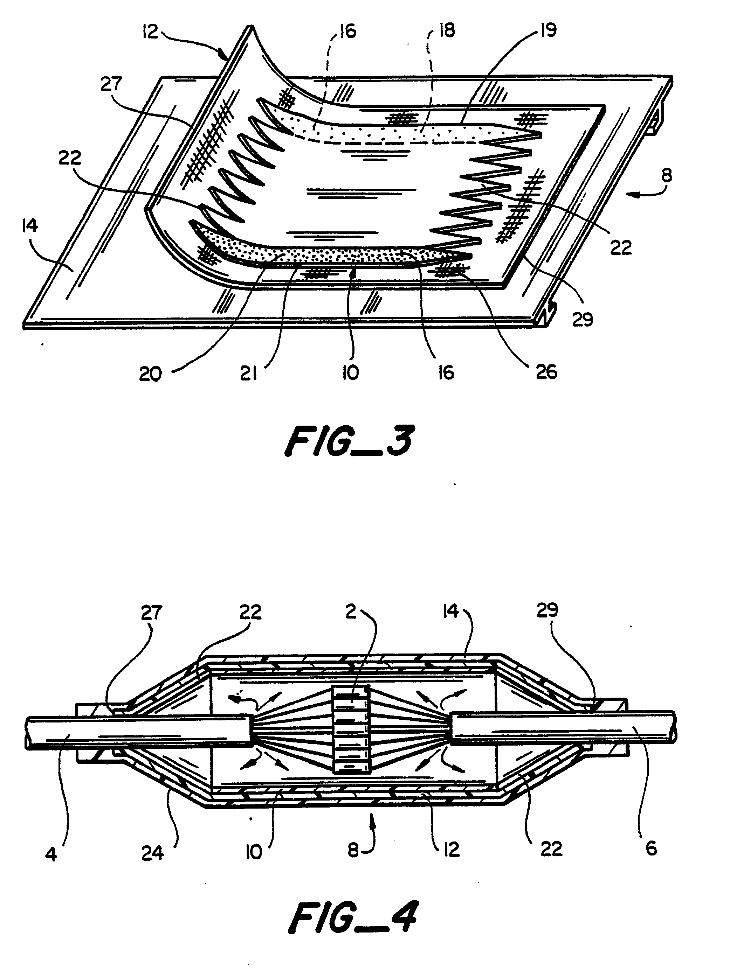

Figure 1 and 2 illustrate alternative preferred embodiments of a pressure-retaining vessel 1 constructed according to the present invention. The general unfolded structure of the vessel is schematically illustrated in Figure 3 in conjunction with a member 14 thus forming a closure 8, and Figures 4 and 6 illustrate partial cross-sectional views of closures 8, 8' in an applied state about a junction 2, 2'. In Figure 3, the member 14 corresponds to a rail and channel type heat-shrinkable sleeve which can be adapted to be heated with a flame, with an oven, or with electric current.

In the embodiment of Figures 1 and 2, the vessel 1 includes an adhesive-coated, reinforcing layer or other member 12. The creep-resistent liner 10 is preferably formed of a material capable of withstanding internal pressures over prolonged periods of time without substantially deforming or exhibiting any significant ballooning effect. Suitable materials for forming the liner are polypropylene (PP), nylon, polyethylene (PE), polyetheleterephthalate (PET), polyvinylchloride (PVC), polyimide, and composite laminates thereof. Liners constructed according to the invention have been demonstrated to satisfactorily withstand internal pressures between 0 and 15 psi at 60°C.

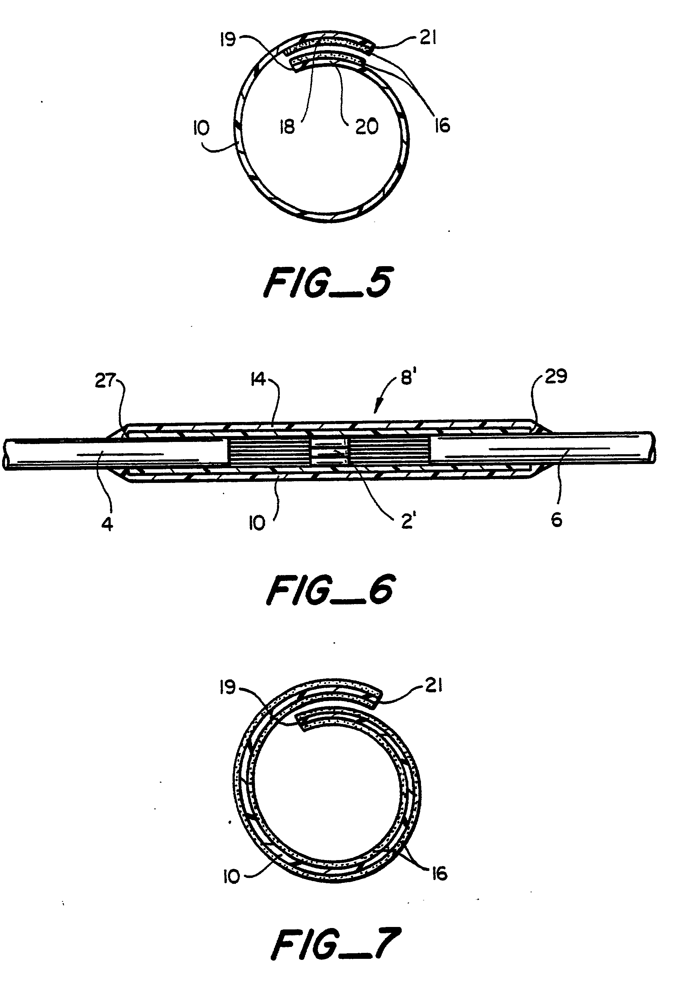

A meltable material 16, e.g., a thermosetting or thermoplastic material, preferably a hot-melt adhesive, is coated on at least one side 18, 20 of the liner 10 in a vicinity of longitudinal edges 19, 21 respectively thereof so that the adhesive 16 is disposed between the sides 18, 20 by wrapping the first liner 10 around the junction 2 so that the side 18 confronts the side 20, as generally illustrated in Figure 5. If desired, entire opposite sides 18, 20 of the liner 10 can be coated with the first adhesive 16 (as shown in Figure 7), or alternatively, the first adhesive 16 may be coated on the sides 18, 20 so that the adhesive 16 confronts and contacts the adhesive 16 when the liner 10 is wrapped around a junction 2 to assure a good bond, this specific embodiment being illustrated in Figure 5. It is preferred to treat the liner prior to applying the first adhesive to facilitate adhesion thereto.

The first liner can have a uniform continuous configuration for use with a nonenlarged junction 2' as shown in Figure 6, or alternatively can have a nonuniform noncontinuous configuration for use with an enlarged junction 2 as shown in Figure 4. For the enlarged junction 2 a preferred liner includes a plurality of finger extensions 22 on opposite ends thereof adjacent opposite ends of the edges 19, 21. The finger extensions 22 taper outwardly as shown in Figures 1-3 so that when the liner 10 is wrapped around the junction 2, which is generally enlarged in size relative to the cables 4, 6, the liner 10 provides a smooth-sized transition in a vicinity of an interface 24 between the cables 4, 6 and the junction 2, as illustrated in Figure 4. Accordingly, sharp bends in a profile of the member 14 are avoided during and after installation thereof. The finger extensions 22 optimally can have some of the first adhesive coated on either or both upper and lower surfaces thereof to facilitate sealing of the finger extensions. Optionally, the liner may include a gas impermeable layer, such as metalized film.

The reinforcing layer 12 comprises a reinforcing film(s) having a meltable material, e.g., again a thermosetting or thermoplastic material, preferably another hot-melt adhesive, disposed on a surface thereof confronting the finger extensions or liner ends 27, 29, or alternatively can comprise a fibrous mat or fabric having the second adhesive 26 impregnated therein. Preferred materials for constructing the second liner when it is a film comprise PE, PET, ethylene vinyl acetate (EVA), and nylon. If the second liner is a fibrous mat or fabric, preferred constructions are to use a cotton, glass, carbon, or synthetic (e.g., PET, nylon) fibers impregnated with the second hot-melt adhesive 26. When reinforcing layer 12 is used, it is so constructed that heat generated subsequent to applying the member 14 causes the second adhesive to melt and flow to seal areas adjacent to and between the finger extensions 22, or alternatively adjacent ends 27, 29 (for the embodiment of Figure 4) as well as an overlap formed between the liner sides 18, 20 with the aid of the first adhesive.

Reinforcing layer 12 can be omitted for straight, continuous junction configurations such as that shown in Figure 6. However, side 20 of liner 10 has to be completely coated with adhesive (Figure 7) so that when heat is applied to member 14, this adhesive can bond to the cable surface thus sealing the junction.

The liner 10 and the reinforcing layer 12 can comprise separate, individual elements which are applied around the junction in a sequential manner, or alternatively the reinforcing layer 12 can be joined to the liner during manufacture, thus requiring that only the resulting composite structure be wrapped around the junction 2. In addition, whether the liner 10 and layer 12 are provided separately or as a composite structure, the layer 12 can be disposed inside or alternatively outside the liner 10, these two separate embodiments being shown in Figures 1 and 2 respectively. However, the reinforcing layer 12 should be formed so as to have a longitudinal length which exceeds that of the liner 10, including the length provided by any finger extensions 22, so that the reinforcing layer 12 can provide sufficient adhesive 26 so as to guarantee that the finger extensions 22 or ends 27, 29 form pressure-tight seals around the cables 4, 6.

It should be understood that various other elements can also be used for the member 12 these other elements including, but not being limited to, an adhesive-coated tape, a reactive putty, a reactive two-part liquid held inside a flexible bag, an adhesive coated tube, etc., with the term "member" including all such elements.

After applying the member 14 and melting the first and second adhesives 16, 26, the liner and layer 10, 12 together form a pressure-retaining vessel around the junction 2, 2' and ends of the cables 4, 6 adjacent thereto such that the liner and layer 10, 12 and adhesives 16, 26 independently are capable of retaining pressure within the junction 2, 2' when the cables 4, 6 are pressurized. Accordingly, the member 14 does not "see" the pressure within the junction 2 and cables 4, 6 subsequent to bracing the junction 2 since the liner and layer 10, 12 are capable of handling the entire pressure load, and accordingly a relatively inexpensive member 14 can be utilised in accordance with the teachings of the present invention which is not required to be creep-resistant since this function is handled by the liner and layer 10, 12. Therefore, the member 14 can be formed of less expensive materials and can be made thinner as compared with prior art pressurized closures. Preferably, best results are obtained if the liner and layer 10, 12 are formed of heat-stable materials excluding the adhesives 16, 26.

Though the invention has been described with reference to certain preferred embodiments thereof, it should be readily understood that modifications thereto can be made within the spirit and scope of the present invention, and accordingly, the scope thereof is to be limited only by the appended claims.

## Claims

1. A pressure-retaining vessel (1) for bracing a junction which in use is pressurized, comprising a heat-shrinkable sleeve (8), and a heat-stable liner therefore, in which the liner (10) is creep-resistant and has a first adhesive (16) on a surface thereof in a vicinity of at least one side edge thereof, the first adhesive (16) being located so as to confront opposite side surfaces of the liner which overlap one another when the liner is wrapped around the junction; and characterized in that the vessel additionally comprises:
a reinforcing heat-stable member (12) comprising a layer and being larger than the liner (10);
a second adhesive (26) disposed on the reinforcing member, the reinforcing member (12) being positioned such that the second adhesive contacts entire opposite ends of the liner (10) and entire opposite ends of the reinforcing member when wrapped around the junction, and such that the reinforcing member is disposed outside or within the member; and
means for disposing the second adhesive (26) adjacent to opposite ends of the liner (10) which are adjacent to opposite ends of the liner edge;
the liner (10), reinforcing heat stable member (12) and first and second adhesive (16, 26) being formed so as to form a pressure-retaining vessel (1) capable of withstanding internal pressure at the junction.

2. The vessel as claimed in claim 1, the means for disposing comprising the reinforcing heat-stable member (12).

3. The vessel as claimed in claim 2, the liner having a plurality of finger extensions at opposite ends thereof for smoothing a transition between the junction and cables interconnected thereby.

4. The vessel as claimed in claim 2, the liner having continuous profile opposite ends.

5. The vessel as claimed in claim 4, the means for disposing comprising the liner which has opposite sides thereof completely coated with the second adhesive.

6. The vessel as claimed in claim 2, the first and second adhesives being hot-melt adhesives.

7. The vessel as claimed in claim 2, the reinforcing member being disposed around the junction inside of the liner, the reinforcing member comprising a heat-stable film having one or both surfaces coated with the second adhesive.

8. The vessel as claimed in claim 7, the film being a material selected from the group consisting of nylon, polyethylene, polypropylene, polyetheleterephthalate, polyvinylchloride, polyimide, and composite laminates thereof.

9. The vessel as claimed in claim 6, the reinforcing member being disposed around the junction inside of the first liner, the reinforcing member comprising a heat-stable fibrous mat or fabric impregnated with the second adhesive.

10. The vessel as claimed in claim 9, fibers of the mat or fabric being cotton, glass, carbon, or synthetic.

11. The vessel as claimed in claim 2, the reinforcing member being disposed around the junction outside of the liner, the reinforcing member comprising a heat-stable film having one or both surfaces in a region of the opposite liner ends coated with the second adhesive.

12. The vessel as claimed in claim 11, the film being a material selected from the group consisting of nylon, polyethylene, polypropylene, polyetheleterephthalate, polyvinylchloride, polyimide, and composite laminates thereof.

13. The vessel as claimed in claim 2, the reinforcing member being disposed around the junction outside of the first liner, the reinforcing member comprising a heat-stable fibrous mat or fabric impregnated with the second adhesive.

14. The vessel as claimed in claim 13, the fibres of the mat being cotton, glass, carbon, or synthetic.

15. The vessel as claimed in claim 2, further comprising a heat-shrinkable member disposed around the liner and the reinforcing member, the heat-shrinkable member having a hot-melt adhesive coated on an inside surface thereof.

16. The vessel as claimed in claim 1, an entire surface of the liner being coated with the first adhesive.

17. The vessel as claimed in claimed in claim 2, the liner and reinforcing member being integrally connected prior to being installed around the junction.

18. The vessel as claimed in claim 1, the junction including splices connecting first and second cables which, in use, are pressurized.

19. A method of forming a pressure-retaining vessel (1) around a junction which, in use, is pressurized characterized in that it comprises the steps of:
wrapping a creep-resistant heat-stable liner (10) around the junction such that an activatable first adhesive (16) is disposed between overlapping sides thereof,
disposing a reinforcing heat-stable member (12) comprising a layer and being larger than the liner (10) around at least opposite longitudinal ends of the liner (10) such that a second adhesive (26) contacts the liner ends and opposite longitudinal ends of the reinforcing member (12);
activating the first and second adhesive (16, 26) to seal the liner sides and ends such that the liner, reinforcing member (12), and first and second adhesive (16, 26) form a pressure-retaining vessel (1) capable of retaining pressure within the junction; and heat-shrinking a heat-shrinkable sleeve (8) around the liner.

20. The method as claimed in claim 19, the first and second adhesives being hot-melt adhesive, the first and second adhesives being activated by applying heat thereto, the second adhesive being disposed by wrapping a reinforcing member around the liner.

21. The method as claimed in claim 20, in which heat is applied to the heat-shrinkable member to shrink the heat-shrinkable member around the reinforcing member and also to activate the first and second adhesives.

22. The method as claimed in claim 21, the vessel being capable of withstanding an internal pressure of 15 psi (1 bar) at 60°C.

23. The vessel as claimed in claim 1, being capable of withstanding an internal pressure of 15 psi (1 bar) at 60°C.

**Patentansprüche**

1. Druckfester Behälter (1) zum Verstärken einer im Betrieb unter Druck gesetzten Verbindung, umfassend eine wärmeschrumpfbare Hülse (8) und eine warmfeste Einlage dafür, wobei die Einlage (10) kriechfest ist und auf einer Oberfläche im Bereich wenigstens eines ihrer Seitenränder einen ersten Kleber (16) aufweist, der so vorgesehen ist, daß er gegenüberliegenden Seitenflächen der Einlage, die einander überlappen, wenn die Einlage um die Verbindung gewickelt ist, gegenübersteht; dadurch gekennzeichnet, daß der Behälter außerdem folgendes aufweist:
ein warmfestes Verstärkungsteil (12), das eine Lage umfaßt und größer als die Einlage (10) ist;
einen auf dem Verstärkungsteil vorgesehenen zweiten Kleber (26), wobei das Verstärkungsteil (12) so positioniert ist, daß der zweite Kleber die gesamten entgegengesetzten Enden der Einlage (10) und die gesamten entgegengesetzten Enden des Verstärkungsteils im um die Verbindung gewickelten Zustand kontaktiert, so daß das Verstärkungsteil außerhalb oder innerhalb der Einlage angeordnet ist; und
Mittel zum Anbringen des zweiten Klebers (26) angrenzend an entgegengesetzten Enden der Einlage (10), die an entgegengesetzte Enden des Einlagenrandes angrenzen;
wobei die Einlage (10), das warmfeste Verstärkungsteil (12) sowie der erste und der zweite Kleber (16, 26) so ausgebildet sind, daß sie einen druckfesten Behälter (1) bilden, der dem Innendruck an der Verbindung standhalten kann.

2. Behälter nach Anspruch 1, dadurch gekennzeichnet, daß die Mittel zum Anbringen das warmfeste Verstärkungsteil (12) umfassen.

3. Behälter nach Anspruch 2, dadurch gekennzeichnet, daß die Einlage eine Mehrzahl Fingeransätze an ihren entgegengesetzten Enden aufweist, die einen Übergang zwischen der Verbindung und dadurch miteinander verbundenen Kabeln vergleichmäßigen.

4. Behälter nach Anspruch 2, dadurch gekennzeichnet, daß die Einlage entgegengesetzte Enden mit kontinuierlichem Profil aufweist.

5. Behälter nach Anspruch 4, dadurch gekennzeichnet, daß die Mittel zum Anbringen die Einlage umfassen, deren entgegengesetzte Seiten vollständig mit dem zweiten Kleber beschichtet sind.

6. Behälter nach Anspruch 2, dadurch gekennzeichnet, daß der erste und der zweite Kleber Schmelzkleber sind.

7. Behälter nach Anspruch 2, dadurch gekennzeichnet, daß das Verstärkungsteil um die Verbindungsstelle herum an der Innenseite der Einlage angeordnet ist und das Verstärkungsteil einen warmfesten Film umfaßt, dessen eine oder beide Oberflächen mit dem zweiten Kleber beschichtet ist/sind.

8. Behälter nach Anspruch 7, dadurch gekennzeichnet, daß der Film aus einem Material aus der Gruppe gewählt ist, die aus Nylon, Polyethylen, Polypropylen, Polyethylenterephthalat, Polyvinylchlorid, Polyimid und Schichtstoff-Verbundstoffen davon besteht.

9. Behälter nach Anspruch 6, dadurch gekennzeichnet, daß das Verstärkungsteil um die Verbindung herum an der Innenseite der ersten Einlage angeordnet ist und das Verstärkungsteil eine warmfeste Fasermatte oder ein Fasergewebe ist, die bzw. das mit dem zweiten Kleber getränkt ist.

10. Behälter nach Anspruch 9, dadurch gekennzeichnet, daß die Fasern der Matte oder des Gewebes Baumwoll-, Glas-, Kohlenstoff- oder Synthesefasern sind.

11. Behälter nach Anspruch 2, dadurch gekennzeichnet, daß das Verstärkungsteil um die Verbindung herum an der Außenseite der Einlage angeordnet ist und das Verstärkungsteil einen warmfesten Film umfaßt, dessen eine oder beide Oberflächen in einem Bereich der entgegengesetzten Einlagenenden mit dem zweiten Kleber beschichtet sind.

12. Behälter nach Anspruch 11, dadurch gekennzeichnet, daß der Film aus einem Material aus der Gruppe gewählt ist, die aus Nylon, Polyethylen, Polypropylen, Polyethylenterephthalat, Polyvinylchlorid, Polyimide und Schichtstoff-Verbundstoffen davon besteht.

13. Behälter nach Anspruch 2, dadurch gekennzeichnet, daß das Verstärkungsteil um die Verbindung herum an der Außenseite der ersten Einlage angeordnet und eine mit dem zweiten Kleber getränkte warmfeste Fasermatte oder ein Fasergewebe ist.

14. Behälter nach Anspruch 13, dadurch gekennzeichnet, daß die Fasern der Matte Baumwoll-, Glas-, Kohlenstoff- oder Synthesefasern sind.

15. Behälter nach Anspruch 2, gekennzeichnet durch ein um die Einlage und das Verstärkungsteil herum angeordnetes wärmeschrumpfbares Teil, das auf einer Innenfläche mit einem Schmelzkleber beschichtet ist.

16. Behälter nach Anspruch 1, dadurch gekennzeichnet, daß eine gesamte Oberfläche der Einlage mit dem ersten Kleber beschichtet ist.

17. Behälter nach Anspruch 2, dadurch gekennzeichnet, daß die Einlage und das Verstärkungsteil vor der Montage um die Verbindung herum integral miteinander verbunden werden.

18. Behälter nach Anspruch 1, dadurch gekennzeichnet, daß die Verbindung Spleißstellen aufweist, die erste und zweite Kabel miteinander verbinden, die im Betrieb unter Druck stehen.

19. Verfahren zum Bilden eines druckfesten Behälters (1) um eine Verbindung herum, die im Betrieb unter Druck steht, gekennzeichnet durch die folgenden Schritte:
Wickeln einer kriechfesten warmfesten Einlage (10) um die Verbindung herum, so daß ein aktivierbarer erster Kleber (16) zwischen überlappenden Seiten der Einlage liegt,
Anordnen eines warmfesten Verstärkungsteils (12), das eine Lage umfaßt und größer als die Einlage (10) ist, um wenigstens entgegengesetzte Längsenden der Einlage (10) derart, daß ein zweiter Kleber (26) die Einlagenenden und entgegengesetzte Längsenden des Verstärkungsteils (12) kontaktiert;
Aktivieren des ersten und des zweiten Klebers (16, 26) zum dichten Verbinden der Einlagenseiten und -enden derart, daß die Einlage, das Verstärkungsteil (12) sowie der erste und der zweite Kleber (16, 26) einen druckfesten Behälter (1) bilden, der den Druck innerhalb der Verbindung halten kann; und
Aufschrumpfen einer wärmeschrumpfbaren Hülse (8) um die Einlage herum.

20. Verfahren nach Anspruch 19, dadurch gekennzeichnet, daß der erste und der zweite Kleber Schmelzkleber sind, daß sie durch Aufbringen von Wärme aktiviert werden und daß der zweite Kleber durch Wickeln eines Verstärkungsteils um die Einlage angebracht wird.

21. Verfahren nach Anspruch 20, dadurch gekennzeichnet, daß auf das wärmeschrumpfbare Teil Wärme aufgebracht wird, um es auf das Verstärkungsteil aufzuschrumpfen und außerdem den ersten und den zweiten Kleber zu aktivieren.

22. Verfahren nach Anspruch 21, dadurch gekennzeichnet, daß der Behälter einem Innendruck von 1 bar (15 psi) bei 60°C standhalten kann.

23. Behälter nach Anspruch 1, dadurch gekennzeichnet, daß er einem Innendruck von 1 bar (15 psi) bei 60°C standhalten kann.

## Revendications

1. Enceinte retenant la pression (1) destinée à consolider une jonction qui est mise sous pression en service, comprenant une gaine thermorétractable (8) et une chemise stable à la chaleur pour doubler cette gaine, dans laquelle la chemise (10) est résistante au fluage et porte un premier adhésif (16) sur une surface située dans le voisinage d'au moins un bord latéral, le premier adhésif (16) étant disposé de manière à se trouver face à des surfaces latérales opposées de la chemise qui se recouvrent mutuellement lorsque la chemise est enroulée autour de la jonction; et caractérisée en ce que l'enceinte comprend en outre;
un composant de renforcement stable à la chaleur (12) qui comprend une couche et est de plus grande dimension que la chemise (10);
un deuxième adhésif (26) disposé sur le composant de renforcement, le composant de renforcement (12) étant positionné de telle manière que le deuxième adhésif entre en contact avec la totalité des extrémités opposées de la chemise (10) et la totalité des extrémités opposées du composant de renforcement lorsqu'il est enroulé autour de la jonction, et de telle manière que le composant de renforcement soit disposé à l'extérieur ou à l'intérieur du composant; et des moyens destinés à disposer le deuxième adhésif (26) dans la région adjacente aux extrémités opposées de la chemise (10) qui sont adjacentes aux extrémités opposées du bord de la chemise;
la chemise (10), le composant de renforcement (12) stable à la chaleur, ainsi que le premier et le deuxième adhésifs (16, 26) étant conformés de manière à former une enceinte retenant la pression (1) capable de résister à une pression interne au droit de la jonction.

2. Enceinte selon la revendication 1, dans laquelle les moyens servant à disposer le deuxième adhésif (26) dans la région des extrémités opposées de la chemise (10) qui sont adjacentes aux extrémités opposées du bord de la chemise comprennent le composant de renforcement stable à la chaleur (12).

3. Enceinte selon la revendication 2, dans laquelle la chemise possède une pluralité de prolongements en forme de doigts à ses extrémités opposées, pour donner une transition douce entre la jonction et les câbles raccordés par cette jonction.

4. Enceinte selon la revendication 2, dans laquelle la chemise présente des extrémités opposées qui possèdent un profil continu.

5. Enceinte selon la revendication 4, dans laquelle les moyens servant à disposer le deuxième adhésif (26) dans la région des extrémités opposées de la chemise (10) qui sont adjacentes aux extrémités opposées du bord de la chemise comprennent la chemise dont les faces opposées sont entièrement enduites du deuxième adhésif.

6. Enceinte selon la revendication 2, dans laquelle le premier adhésif et le deuxième adhésif sont des adhésifs fondant à chaud.

7. Enceinte selon la revendication 2, dans laquelle le composant de renforcement est disposé autour de la jonction, à l'intérieur de la chemise, le composant de renforcement comprenant un film stable à la chaleur dont une ou chacune des deux faces est enduite du deuxième adhésif.

8. Enceinte selon la revendication 7, dans laquelle le film est une matière choisie dans le groupe composé du nylon, du polyéthylène, du polypropylène, du polytéréphthalate d'éthylène, du polychlorure de vinyle, d'une polyimide et des stratifiés composites de ces substances.

9. Enceinte selon la revendication 6, dans laquelle le composant de renforcement est disposé autour de la jonction à l'intérieur de la première chemise, le composant de renforcement comprenant un tissu ou un voile de fibres stable à la chaleur, qui est imprégné du deuxième adhésif.

10. Enceinte selon la revendication 9, dans laquelle les fibres du voile ou du tissu sont des fibres de coton, de verre, de carbone ou des fibres synthétiques.

11. Enceinte selon la revendication 2, dans laquelle le composant de renforcement est disposé autour de la jonction, à l'extérieur de la chemise, le composant de renforcement comprenant un film stable à la chaleur dont une ou chacune des deux faces est enduite du deuxième adhésif dans la région des extrémités opposées de la chemise.

12. Enceinte selon la revendication 11, dans laquelle le film est fait d'une matière choisie dans le groupe composé du nylon, du polyéthylène, du polypropylène, du polytéréphthalate d'éthylène, du polychlorure de vinyle, de la polyimide et des stratifiés composites de ces substances.

13. Enceinte selon la revendication 2, dans laquelle le composant de renforcement est disposé autour de la jonction, à l'extérieur de la première chemise, le composant de renforcement comprenant un tissu ou un voile de fibres stable à la chaleur imprégné du deuxième adhésif.

14. Enceinte selon la revendication 13, dans laquelle les fibres du voile sont des fibres de coton, de verre, de carbone ou des fibres synthétiques.

15. Enceinte selon la revendication 2, comprenant en outre un composant thermorétractable disposé autour de la chemise et du composant de renforcement, le composant thermorétractable portant un adhésif fondant à chaud déposé sur sa surface intérieure.

16. Enceinte selon la revendication 1, dans laquelle toute la surface de la chemise est revêtue du premier adhésif.

17. Enceinte selon la revendication 2, dans laquelle la chemise et le composant de renforcement sont assemblés en un élément d'un seul tenant avant d'être mis en place autour de la jonction.

18. Enceinte selon la revendication 1, dans laquelle la jonction comprend des épissures qui raccordent un premier câble et un deuxième câble qui sont mis sous pression en service.

19. Procédé de formation d'une enceinte retenant la pression (1) autour d'une jonction qui est mise sous pression en service, caractérisé en ce qu'il comprend les phases consistant à:
enrouler une chemise (10) résistante au fluage et stable à la chaleur autour de la jonction de telle manière qu'un premier adhésif activable (16) soit disposé entre des côtés de cette chemise qui se recouvrent,
disposer un composant de renforcement stable à la chaleur (12) comprenant une couche et qui est de plus grande dimension que la chemise (10) au moins autour des extrémités longitudinales opposées de la chemise (10), de telle manière qu'un deuxième adhésif (26) entre en contact avec les extrémités de la chemise et avec les extrémités longitudinales opposées du composant de renforcement (12);
activer le premier adhésif et le deuxième adhésif (16, 26) pour fermer hermétiquement les côtés et les extrémités de la chemise de telle manière que la chemise, le composant de renforcement (12) et les premier et deuxième adhésifs (16, 26) forment une enceinte retenant la pression (1) capable de retenir la pression à l'intérieur de la jonction; et thermorétracter une gaine thermorétractable (8) autour de la chemise.

20. Procédé selon la revendication 19, dans lequel les premier et deuxième adhésifs sont des adhésifs fondant à chaud, les premier et deuxième adhésifs étant activés par un apport de chaleur, le deuxième adhésif étant disposé en enroulant un composant de renforcement autour de la chemise.

21. Procédé selon la revendication 20, dans lequel on apporte de la chaleur au composant thermorétractable pour rétracter le composant thermorétractable autour du composant de renforcement et aussi pour activer les premier et deuxième adhésifs.

22. Procédé selon la revendication 21, dans lequel l'enceinte est capable de résister à une pression interne de 1 bar (15 psi) à 60°C.

23. Enceinte selon la revendication 1, qui est capable de résister à une pression interne de 1 bar (15 psi) à 60°C.

FIG__1

FIG__2

EP 0 194 040 B1

FIG_3

FIG_4

FIG_5

FIG_6

FIG_7